# EUROPEAN PATENT APPLICATION

(11) **EP 4 819 681 A1**
(43) Date of publication of application: **07.10.2026**
(21) Application number: 26165733.2
(22) Date of filing: 18.03.2026
(51) Int. Cl.: H04W 24/10

(54) **SYSTEMS AND METHODS FOR HANDLING MEASUREMENTS FOR DATA COLLECTION IN VIEW OF CONFLICTING CONDITIONS**

(30) Priority: 19.03.2025 US 202563774289 P; 09.03.2026 US 202619561364
(71) Applicant: Samsung Electronics Co., Ltd., Suwon-si, Gyeonggi-do 16677 (KR)
(72) Inventor: HEO, Youn Hyoung, San Jose, CA, 95134 (US); SABER, Hamid, San Jose, CA, 95134 (US); BAE, Jung Hyun, San Jose, CA, 95134 (US); CHENG, Yuan-Sheng, San Jose, CA, 95134 (US)
(74) Representative: Kuhnen & Wacker Patent- und Rechtsanwaltsbüro PartG mbB

(57) **Abstract**

A system (1) and a method are disclosed for handling resource measurements for data collection. The method includes, based on a user equipment, UE (105), being configured with more than one bandwidth part, BWP, and a first BWP of the more than one BWP being activated, performing logging, by the UE (105), of a first channel state information, CSI, measurement result associated with a first resource, corresponding to the first BWP, as an entry of an artificial-intelligence/machine-learning, AI/ML, dataset, and transmitting, by the UE (105), the first CSI measurement result from the UE (105), based on the AI/ML dataset.

## Description

### TECHNICAL FIELD

Aspects of some embodiments of the present disclosure generally relate to communications. For example, aspects of some embodiments of the present disclosure relate to improvements to systems and methods for performing measurements for data collection.

### SUMMARY

In the field of communications, beam management (BM) may be performed in a communications system to predict the best beam for a given UE to use for communicating with a network (NW). In some systems, an artificial-intelligence/machine-learning (Al/ML) model may be used to predict the best beam. For example, a network node may include an NW-sided model (e.g., an NW Al/ML model), trained on collected data, to predict the best beam for a given UE. To train the NW-sided model for beam management use cases, the NW may configure the given UE to collect data for training. For example, the network node may configure the UE to perform measurements of channel state information reference-signal (CSI-RS) resources and to log the measurement results for data collection for Al/ML training at the NW-sided model. The logged measurement results may be sent once the NW (e.g., a network node) requests the UE to report by using (e.g., by sending) on-demand requests. For example, the UE may be configured to record measurements periodically based on CSI-RS resources (e.g., based on periodic resources), to store the measurement results in a log (e.g., a list, a table, and/or the like), and to send the log or one or more of the measurement results to the NW (e.g., to the network node) when requested by the NW. The NW may use the log (e.g., to use data from the log) to train the Al/ML model for beam prediction.

Aspects of some embodiments of the present disclosure provide for improved systems and methods of performing data collection, which may be used for training Al/ML models used for beam management.

According to some embodiments of the present disclosure, a method for data collection includes, based on a user equipment (UE) being configured with more than one bandwidth part (BWP), and a first BWP of the more than one BWP being activated, performing logging, by the UE, of a first channel state information (CSI) measurement result associated with a first resource, corresponding to the first BWP, as an entry of an artificial-intelligence/machine-learning (AI/ML) dataset, and transmitting, by the UE, the first CSI measurement result from the UE, based on the Al/ML dataset.

The AI/ML dataset may include data indicating that a second CSI measurement was not performed.

The method may further include, based on a second BWP of the more than one BWP being deactivated, not performing logging, by the UE, of a second CSI measurement result for Al/ML data collection associated to the second BWP.

The method may further include, transmitting, by the UE, data indicating why the logging of the second CSI measurement was not performed.

The method may further include, based on a second resource for Al/ML data collection corresponding to a measurement gap, not performing, by the UE, a second measurement for Al/ML data collection, the second measurement being associated with the second resource.

The method may further include, based on a second resource for Al/ML data collection corresponding to a discontinuous reception (DRX) period that is inactive, not performing, by the UE, a second measurement for Al/ML data collection, the second measurement being associated with the second resource.

The method may further include, based on a second resource for Al/ML data collection corresponding to a discontinuous reception (DRX) period that is active and corresponding to a logging mask, not performing, by the UE, a second measurement configured for Al/ML data collection, the second measurement being associated with the second resource.

The method may further include, based on a second resource for Al/ML data collection corresponding to a discontinuous reception (DRX) period that is inactive, performing, by the UE, a second measurement for Al/ML data collection, the second measurement being associated with the second resource.

The method may further include, based on a second resource measurement time for Al/ML data collection corresponding to a discontinuous transmission (DTX) period that is inactive, not performing, by the UE, a second measurement for Al/ML data collection, the second measurement being associated with the second resource measurement time.

The method may further include, based on a second resource for Al/ML data collection corresponding to a discontinuous reception (DRX) period that is inactive and a resource window including the second resource and a third resource for Al/ML data collection, the third resource corresponding to a DRX period that is active, not performing, by the UE, a second measurement for Al/ML data collection associated with the second resource, and not performing, by the UE, a third measurement for Al/ML data collection associated with the third resource.

According to other embodiments of the present disclosure, a method for data collection includes, based on a secondary cell (SCell) being activated, performing logging, by a user equipment (UE), of a CSI measurement result for artificial-intelligence/machine-learning (Al/ML) data collection associated to the SCell for Al/ML data collection.

The method may further include, based on the SCell being deactivated, not performing logging, by the UE, of a second CSI measurement result for Al/ML data collection.

The method may further include transmitting, by the UE, data indicating that a measurement was not performed.

The method may further include, based on a bandwidth part (BWP) being activated, and a serving cell not being a primary secondary cell (PSCell) of a deactivated secondary cell group (SCG), performing, by the UE, a measurement configured for Al/ML data collection associated to the BWP for Al/ML data collection.

According to other embodiments of the present disclosure, a system for data collection includes a user equipment (UE), wherein the UE is configured to perform, based on the UE being configured with more than one bandwidth part (BWP), and a first BWP of the more than one BWP being activated, logging of a first channel state information (CSI) measurement result associated with a first resource, corresponding to the first BWP, as an entry of an artificial-intelligence/machine-learning (AI/ML) dataset, and transmitting the first CSI measurement result from the UE, based on the Al/ML dataset.

The UE may be configured, based on a second BWP of the more than one BWP being deactivated, not to perform logging of a second CSI measurement result for Al/ML data collection associated to the second BWP.

The UE may be configured to transmit data indicating why the logging of the second CSI measurement was not performed.

The UE may be configured, based on a second resource for Al/ML data collection corresponding to a discontinuous reception (DRX) period that is inactive, perform a second measurement configured for Al/ML data collection, the second measurement being associated with the second resource.

The UE may be configured, based on a second resource for an Al/ML data collection corresponding to a discontinuous reception (DRX) period that is inactive, not to perform a second measurement configured for Al/ML data collection, the second measurement being associated with the second resource.

The UE may be configured, based on a secondary cell (SCell) being activated, to perform logging of a second CSI measurement result for Al/ML data collection associated to the SCell for Al/ML data collection.

### BRIEF DESCRIPTION OF THE DRAWING

In the following section, the aspects of the subject matter disclosed herein will be described with reference to exemplary embodiments illustrated in the figures.
FIG. 1A is a block diagram depicting a system including a UE and a network node for handling resource measurements for data collection, according to some embodiments of the present disclosure.
FIG. 1B is a block diagram depicting example operations of an inference procedure for beam management performed by an Al/ML model in the system of FIG. 1A, according to some embodiments of the present disclosure.
FIG. 2 is a block diagram depicting example operations of a procedure for data collection for a network-sided model, according to some embodiments of the present disclosure.
FIG. 3 is a block diagram depicting example operations for skipping measurements for data collection in bandwidth part (BWP) switching, according to some embodiments of the present disclosure.
FIG. 4 is a block diagram depicting example operations for skipping measurements for data collection due to measurement gaps, according to some embodiments of the present disclosure.
FIG. 5A is a block diagram depicting example operations for skipping measurements for data collection in discontinuous reception (DRX), according to some embodiments of the present disclosure.
FIG. 5B is a block diagram depicting example operations for skipping measurements for data collection in DRX when a logging-mask is enabled, according to some embodiments of the present disclosure.
FIG. 5C is a block diagram depicting example operations for performing measurements for data collection in DRX in inactive periods, according to some embodiments of the present disclosure.
FIG. 6 is a block diagram depicting a system for skipping measurements for data collection when a secondary cell (SCell) is deactivated, according to some embodiments of the present disclosure.
FIG. 7 is a block diagram depicting example operations for skipping measurements for data collection in discontinuous transmission (DTX), according to some embodiments of the present disclosure.
FIG. 8A is a diagram depicting an example of temporal prediction, according to some embodiments of the present disclosure.
FIG. 8B is a block diagram depicting example operations for skipping measurements for data collection in a resource measurement window, according to some embodiments of the present disclosure.
FIG. 9, consisting of FIGs. 9A and 9B, is a diagram depicting a table of values for reporting measurement results and skipped measurement results, according to some embodiments of the present disclosure.
FIG. 10 is a block diagram of an electronic device in a network environment, according to some embodiments of the present disclosure.
FIG. 11 is a flowchart depicting example operations of the method for data collection, according to some embodiments of the present disclosure.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the terms "and" and "and/or" include any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Each of the terms "processing circuit" and "means for processing" is used herein to mean any suitable combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

As discussed above, in the field of communications, beam management (BM) may be performed in a communications system to predict the best beam for a user equipment (UE) to use for communicating with a network. For example, the best beam may be determined based on a predicted or measured signal strength, signal to inference plus noise ratio, channel conditions, interference, and/or the like. In some systems, an artificial-intelligence/machine-learning (Al/ML) model may be used to predict the best beam. For example, a network node may include a network work (NW) sided model (e.g., an NW Al/ML model), trained on collected data, to predict the best beam for a given UE.

To train the NW-sided model for beam management use cases, the NW may configure the given UE to collect data for training. For example, the network node may configure the UE to perform measurements of channel state information reference-signal (CSI-RS) resources and to log the measurement results for data collection for Al/ML training at the NW-sided model. The logged measurement results may be sent once the NW (e.g., the network node) requests to report by using (e.g., by sending) on-demand requests. For example, the UE may be configured to record measurements periodically based on CSI-RS resources (e.g., based on periodic resources), to store the measurement results in a log (e.g., a list, a table, and the like), and to send the log or one or more of the measurement results to the NW (e.g., to the network node) when requested by the NW. The NW may use the log (e.g., to use data from the log) to train the Al/ML model for beam prediction.

For beam management prediction use cases, one or more CSI resource sets may be configured for measurement configuration by the NW. Different measurement results may be logged depending on a NW reporting configuration, based on the given model algorithm at the NW side.

Aspects of some embodiments of the present disclosure provide for improved systems and methods of performing data collection for training Al/ML models used for beam management. However, embodiments according to the present disclosure are not limited thereto, and aspects of some embodiments of the present disclosure may be generally applicable for other use cases, which provide for performing measurements for data collection with periodic measurement/logging and reporting the logged measurement results to the NW or to other entities (e.g., to a server).

Aspects of embodiments of the present disclosure provide for improvements to beam management through coordinated measurement skipping and reporting to relatively improve UE performance and beam prediction.

In some embodiments, a UE may handle resource measurements efficiently based on some resources corresponding to (e.g., coinciding with) bandwidth part (BWP) switching.

In some embodiments, a UE may handle resource measurements efficiently based on some resources corresponding to a measurement gap.

In some embodiments, a UE may handle resource measurements efficiently based on some resources corresponding to discontinuous reception (DRX) operation.

In some embodiments, a UE may handle resource measurements efficiently based on some resources corresponding to activation/deactivation of secondary cells (SCells).

In some embodiments, a UE may handle resource measurements efficiently based on some resource measurement times corresponding to discontinuous transmission (DTX) operation.

In some embodiments, a UE may handle resource measurements efficiently based on some resources corresponding to resource windows.

In some embodiments, a UE may handle reporting of resource measurements efficiently based on some resource measurements being skipped (e.g., not being performed).

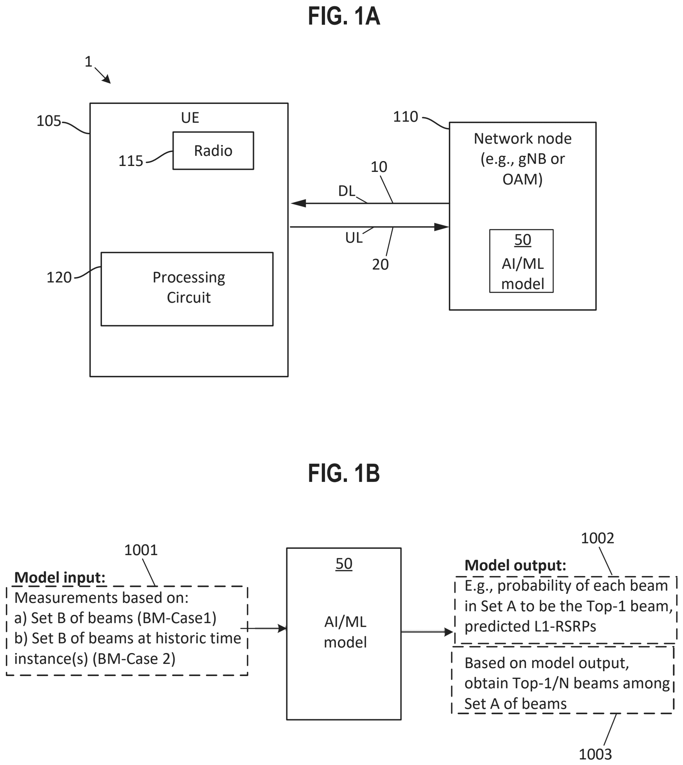

FIG. 1A is a block diagram depicting a system 1 including a UE 105 and a network node 110 (e.g., a gNodeB (gNB), an operation and management entity (OAM), and the like at a network side) for handling resource measurements for data collection, according to some embodiments of the present disclosure.

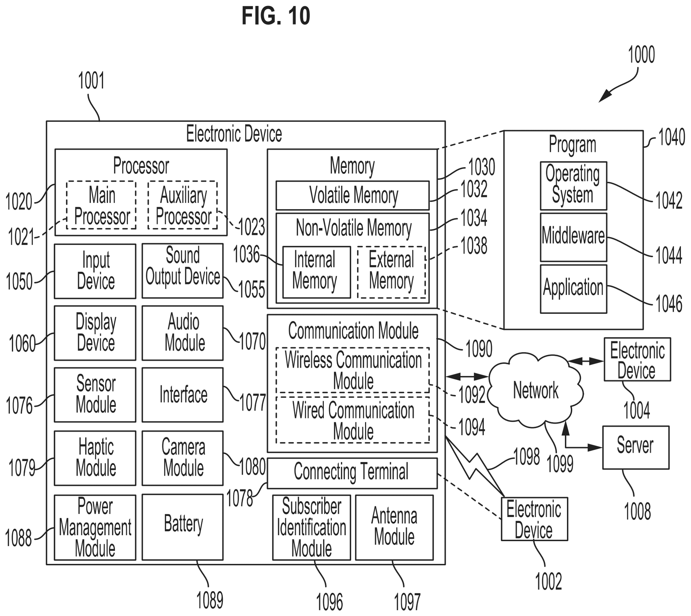

Referring to FIG. 1A, the UE 105 may be capable of receiving DL transmissions 10 from the network node 110 and may be capable of sending UL transmissions 20 to the network node 110. The UE 105 may include a radio 115 and a means for processing. The means for processing may include a processing circuit 120, which may perform various methods disclosed herein. The UE 105 may correspond to the electronic device 1001 (see FIG. 10). The radio 115 may correspond to the communication module 1090 (see FIG. 10). The processing circuit 120 may correspond to the processor 1020 (see FIG. 10). As used herein, the term "UE" is used broadly to refer to electronic communications devices. For example, UEs may include computers, mobile phones, tablets, vehicles, satellites, loT devices, and/or the like.

In some embodiments, an Al/ML model 50 in the system 1 (e.g., in the network node 110) may be trained based on data received from the UE 105. For example, the Al/ML model 50 may be trained, based on data from the UE 105, to predict a best beam to use for performing communications with the UE 105. In some embodiments, the network node 110 may request data measurements from the UE 105 periodically. In some embodiments, the UE 105 may be configured to perform measurements on periodic resources (e.g., on channel state information reference-signal (CSI RS) resources), log the measurement results, and send the measurement results to the network node 110. For example, the UE 105 may store measurement results over time and send multiple measurement results together to the network node 110 (e.g., in a listing or a table). The measurement results may then be used to train the Al/ML model 50 for beam management.

FIG. 1B is a block diagram depicting example operations of an inference procedure for beam management performed by the AI/ML model 50 in the system 1 of FIG. 1A, according to some embodiments of the present disclosure.

In beam management, two cases (e.g., two sub cases) may be supported: (i) BM-Case1: spatial-domain downlink beam prediction for a set A of beams based on measurement results of a set B of beams; and (ii) BM-Case2: temporal downlink prediction for a set A of beams based on historic measurement results of a set B of beams. Both NW-sided models and UE-sided models may be used for beam management. As used herein, a NW-sided model refers to a model that is located in the NW side (e.g., in the network node 110). An NW-sided model may be trained by the NW and may be used by the NW to perform inference (e.g., to make beam predictions). As used herein, a UE-side model refers to a model that is located at the UE side (e.g., in a device or UE server). A UE-side model may be trained by the UE 105 and may be used by the UE 105 to perform inference. Using a UE-side model, the UE 105 may report a prediction result to the NW based on an output of a UE-side model. Using an NW-side model, the NW may predict the top one or more best beams (e.g., the Top-1/N beams) based on the reported measurements of the set B. In summary, the Al/ML model 50 may receive, as inputs, (a) measurements based on the set B of beams (for BM-Case1) or (b) measurements based on the set B of beams at historic time instances (for BM-Case2) (operation 1001). The Al/ML model 50 may output (e.g., may infer) a probability of each beam in the set A being the Top-1 beam (e.g., the best beam) from among predicted layer 1 (L1) reference signal received power (RSRP) measurements (RSRPs) (operation 1002). Based on an output of the Al/ML model 50, the system 1 (e.g., the UE 105 or the network node 110) may obtain the Top-1/N beams among the set A of beams (operation 1003).

Although the present application focuses mostly on NW-side models, it should be understood that the present disclosure is not limited thereto and that aspects of some embodiments of the present disclosure may provide for improvements to both UE-side models and NW-side models.

In some embodiments, the UE 105 may be configured to make periodic measurements (e.g., RSRPs). The periodic measurements may be interrupted due to conflicting conditions, such as existing UE operations (e.g., BWP switching, measurement gaps, DRX operation, activation/deactivation of SCells, DTX operation, and resource windows). Aspects of some embodiments of the present disclosure define UE behavior when a given conflicting condition (e.g., a given conflicting UE operation) occurs.

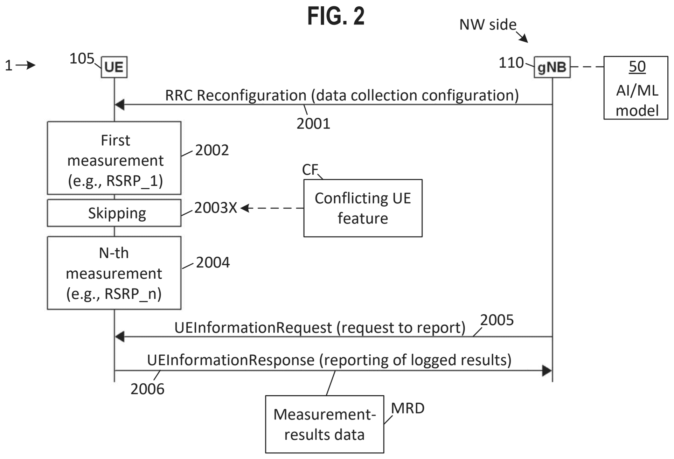

FIG. 2 is a block diagram depicting example operations of a procedure for data collection for a network-sided Al/ML model 50, according to some embodiments of the present disclosure.

Referring to FIG. 2, to train the Al/ML model 50, the NW (e.g., the network node 110) may collect data. The entity to collect the data may be a gNB or an OAM. For certain data, the NW may also configure the UE 105 to collect data.

In some embodiments, because multiple measurement results may be collected for a certain time duration, a measurement framework that is similar to a minimizing driving test (MDT) framework may be utilized. For example, the UE 105 may store a set of data measured as logged measurements (e.g., logged L1 measurements) and may report multiple instances of the logged measurements to the NW upon NW request. Because multiple instances of data may be reported, radio resource control (RRC) signaling may be more desirable, compared to other types of signaling (e.g., L1 signaling, medium access control (MAC) control element (CE) signaling, and the like). That is, in some embodiments, the NW may request the logged measurements using RRC signaling.

In some embodiments, an overall procedure to support UE data collection for NW sided model training may include one or more of the following operations. As basic procedure, the UE 105 may receive a measurement configuration for Al/ML-enabled features/feature groups (FGs) for data collection and logging of measurements. As used herein, measurement logging may refer to the UE 105 performing measurements in multiple instances (e.g., at different times) and storing the measurement results in a memory of the UE 105 until the UE 105 reaches a memory size limit or until the UE 105 reports the logged measurement results to the network node 110 (e.g., the gNB) upon request by the network node 110. In some embodiments, the network node 110 configures (e.g., explicitly configures) the UE 105 to start (e.g., to immediately start) the corresponding data collection and logging (if supported). In some embodiments, the UE 105 stores the logged training data at the access stratum (AS) layer with a minimum AS-layer memory size that is supported by the UE 105. If the UE 105 reaches a buffer limit of the UE 105, the UE 105 may stop performing measurements for data collection purposes and may stop performing logging.

In some embodiments, a periodic measurement logging may be supported for a training-data collection procedure once the network node 110 (e.g., the gNB) provides a resource and reporting configuration. In some embodiments, the system 1 may perform (e.g., may specify) on-demand reporting of the logged measurements. In some embodiments, periodic reporting of logged data may not be supported due to a large number of results (e.g., a large amount of measurement-result data), which may not be immediately utilized. In some embodiments, request messages (e.g., RRC request messages, such as UEInformationRequest) and/or response messages (e.g., RRC response messages, such as UElnformationResponse) may be used for on-demand reporting of Al/ML training data collection.

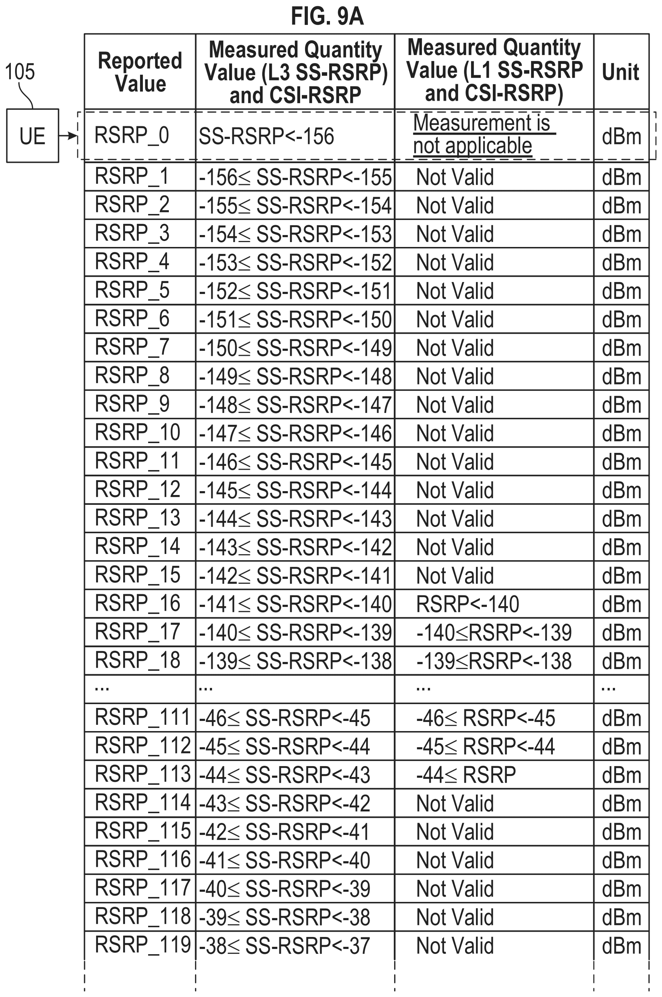

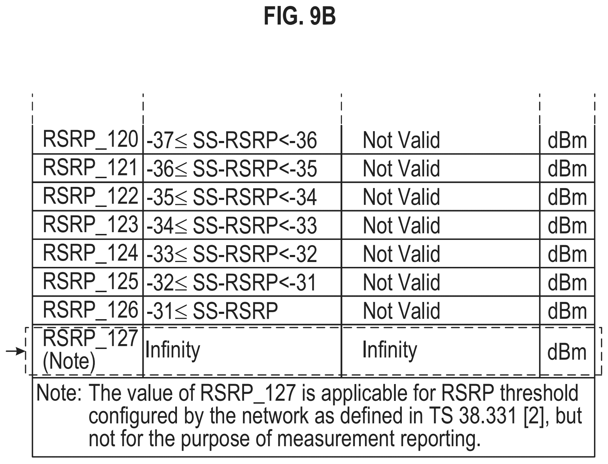

In some embodiments, the network node 110 may send configuration information to the UE 105 (operation 2001). For example, the configuration information may include RRC reconfiguration data for data collection configuration. The UE 105 may perform a first measurement for data collection (e.g., RSRP_1) (operation 2002). As discussed in further detail below, in some embodiments, the UE 105 may skip (e.g., may be configured not to perform) one or more measurements for data collection, based on the occurrence of a conflicting condition (e.g., a conflicting feature CF) of the UE 105 (operation 2003X). The UE 105 may perform an n-th measurement for data collection (e.g., RSRP_n) (operation 2004). The network node 110 may send a request message (e.g., UEInformationRequest) to request a report from the UE 105 (operation 2005). The UE 105 may send a response message (e.g., UEInformationResponse) to report the logged measurement results (operation 2006). As discussed in further detail below with reference to FIG. 9, in some embodiments, the UE 105 may send measurement-results data MRD (e.g., an Al/ML dataset) including data indicating results of the first measurement (e.g., RSRP_1), the n-th measurement (e.g., RSRP_n), one or more intermediate measurements occurring between the first measurement and the n-th measurement (e.g., RSRP_2), and data indicating which measurements were skipped (e.g., RSRP_3 and RSRP_4). In some embodiments, the measurement-results data MRD may include data indicating why each of the skipped measurements were skipped.

In some embodiments, a given request message may include (e.g., may contain) one or more logged measurement entries in chronological order (e.g., starting from the oldest measurement entries stored in the memory of the UE 105). In some embodiments, a given request message may include an availability indication if there is further data available for transmission. For example, the UE 105 may measure RSRP of CSI resources. The UE 105 may store log entries, including RSRP_1 through RSRP_k for logged measurement entries, where RSRP_1 is measured at time t1 (on a first CSI resource after data collection is configured) and RSRP_k is measured at time tk. As used herein, "t1" refers to the first CSI-RS resource occasion upon configuration, and "tk" refers to the k-th time occasion, given that a periodicity of the CSI-RS resources is configured.

In some embodiments, for BM-Case1, one or more of the following three types of content for data collection may be included for each instance of reporting: Type1: all L1-RSRPs measured based on the resources (for Set A/B) configured to the UE 105; Type 2: all L1-RSRPs measured based on resources (for Set B) configured to the UE 105, and beam information of K beams based on some resources (for Set A) configured to the UE 105; Type 3: all L1-RSRPs measured based on resources (for Set B) configured to the UE 105, and beam information and L1-RSRPs of K beams based on some resources (for Set A) configured to the UE 105. For Type 2 and Type 3, the K beams may be the beams with the largest K L1-RSRPs based on the resources (for Set A) in one instance, where K is configured by NW.

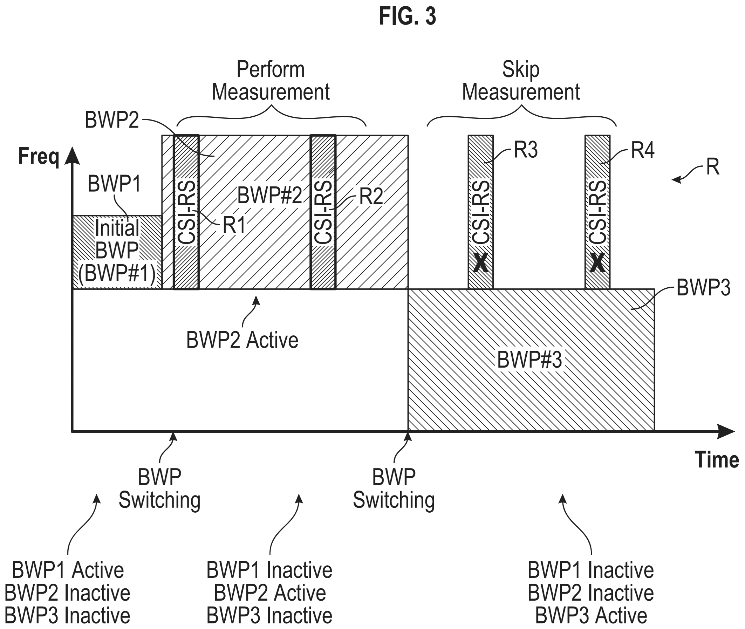

FIG. 3 is a block diagram depicting example operations for skipping measurements for data collection in bandwidth part (BWP) switching, according to some embodiments of the present disclosure.

Referring to FIG. 3, in the 5G NR system, BWP switching may be used to configure a given UE 105 with different bandwidths (referred to as BWPs). Each BWP may be different from a system bandwidth but may be aligned with the bandwidth capability of the UE 105. In addition, BWPs can be used to save UE power consumption by using the smaller bandwidth of a BWP when there is less (e.g., when there is no) traffic activity. In some embodiments, the network node 110 (e.g., the gNB) may configure up to 4 dedicated BWPs to the UE 105 in a connected mode, which may or may not include an initial BWP (e.g., BWP1). In BWP switching, among the up to 4 BWPs, only one BWP can be activated at a given time, and the UE 105 can transmit and receive on (e.g., only on) an activated BWP. BWP activation may be indicated via RRC, via downlink control information (DCI), or via a BWP inactivity timer.

As discussed above, if (e.g., when) the UE 105 is configured with existing UE features (e.g., with conflicting features CF as discussed with reference to FIG. 2) and with data collection simultaneously, the UE 105 may handle the conflicting cases (e.g., the conflicting features CF) according to aspects of embodiments of the present disclosure, if the UE 105 cannot perform data logging (e.g., cannot perform measurements for data collection for training the Al/ML model 50).

In current CSI resource configuration, a BWP identifier (e.g., BWP-ID) may be indicated to the UE 105, and the UE 105 may start or stop CSI reporting based on activated BWPs. That is, the UE 105 may measure CSI for the activated BWP only, by using the BWP identifier. Accordingly, the UE 105 may measure CSI resources associated with activated BWPs only.

Similarly, in some embodiments, data collection logging may also be adjusted based on the activated BWPs, although there may be no corresponding CSI report. That is, the UE 105 can start or stop performing measurements depending on activated BWPs. If a CSI-RS resource for data collection for training the AI/ML model 50 is associated with an activated BWP, the UE 105 may perform measurements for data collection. Otherwise, the UE 105 may skip performing measurements for the corresponding CSI-RS resource (set).

For example, and referring still to FIG. 3, a first resource R1 (e.g., a CSI-RS resource) and a second resource R2 may correspond to (e.g., may coincide with) a second bandwidth part BWP2 that is active. As such, the UE 105 may perform measurements on the first resource R1 and the second resource R2, which are configured for Al/ML data collection associated to (e.g., associated with) the second bandwidth part BWP2 for data collection. That is, the UE may perform/log measurement of the resources if the associated/overlapped BWP is active. Contrastingly, BWP switching may occur after measurements are performed on the first resource R1 and the second resource R2, such that the second bandwidth part BWP2 becomes inactive (e.g., is not active) and the third bandwidth part BWP3 becomes active. As such, the UE 105 may skip performing (e.g., may not perform) measurements on a third resource R3 and a fourth resource R4, which correspond to the inactive second bandwidth part BWP2. That is, the UE may skip measurement if the associated/overlapped BWP is not active. In some embodiments, the resources R may be configured by the network node 110 to be periodic resources, such that the network node 110 may expect measurement from the UE for measurement data associated with each resource R.

In some embodiments, based on a given BWP being activated, based on the BWP (e.g., an active downlink (DL) BWP) for a serving cell not being a dormant BWP, and based on the serving cell not being a primary secondary cell (PSCell) of a deactivated secondary cell group (SCG), the UE 105 may perform a measurement configured for Al/ML data collection associated to the BWP for the Al/ML data collection. In some embodiments, the UE 105 may perform logging of channel state information (CSI) if the given activated BWP is active. In other words, in some embodiments, based on the UE 105 being configured with more than one BWP, and a first BWP of the more than one BWP being activated, the UE 105 may perform logging of a first CSI measurement result associated with a first resource (e.g., a first CSI resource) corresponding to the first BWP. In some embodiments, based on the UE 105 being configured for Al/ML data collection associated to (e.g., associated with) the first BWP, the UE 105 may perform a first CSI measurement corresponding to the first BWP and may log (e.g., may save) a result of the first CSI measurement (e.g., the first CSI measurement result) as an entry of an Al/ML dataset (e.g., an Al/ML log). In some embodiments, the UE 105 may transmit the first CSI measurement result from the UE, based on the Al/ML dataset. For example, the UE 105 may send the first CSI measurement result to the network node 110 (see FIG. 1). The network node 110 may train the Al/ML model 50 using the first CSI measurement result.

Referring to FIG. 3, the active DL BWP switches from BWP1 to BWP2 to BWP3. BWP activation may be based on a given scheduling strategy and channel condition. A dormant BWP refers to a special BWP with which the UE 105 does not monitor a physical downlink control channel (PDCCH). The UE 105 may be configured with up to 4 BWPs (configured BWPs), with only one BWP being activated at one time. The activated BWP may be dynamically or semi-statically switched). One of the configured BWPs may be configured with dormant BWP (e.g., may be configured as a dormant BWP). If a given BWP is switched to a dormant BWP, the UE 105 may stop monitoring PDCCH to save power. In some embodiments, the UE 105 may support dual connectivity, in which the UE 105 is configured with a master cell group (MCG) and a secondary cell group (SCG). That is, the UE 105 may be thought of as being connected to two different network nodes 110 (e.g., two different gNBs). Each network node 110 (e.g., each gNB) can configure carrier aggregation (CA). Accordingly, the MCG and SCG may be referred to as cell groups.

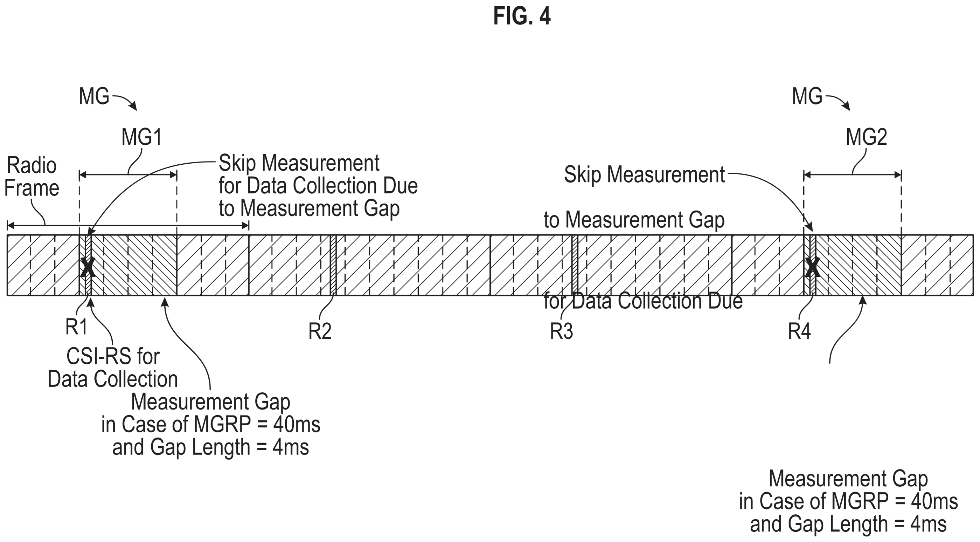

FIG. 4 is a block diagram depicting example operations for skipping measurements for data collection due to measurement gaps MG, according to some embodiments of the present disclosure.

Referring to FIG. 4, measurement gaps MG may be used to perform radio resource management (RRM) for handover processes, during which the UE 105 may perform inter-frequency measurements, intra-frequency measurements, or inter-radio access technology (RAT) measurements. Depending on the capabilities of a given UE 105, the UE 105 may not perform measurements for intra-frequency/inter-frequency/RAT while the UE 105 transmits or receives with a serving cell. To help with measurements for such UEs 105, the network node 110 may introduce one or more measurement gaps MG. During the measurement gaps MG, the UE 105 may be expected not to transmit or receive signals with the serving cell, but to perform measurements instead. The periodicity of or the length of the measurement gaps may be configured by the network node 110 (e.g., by the gNB). During a measurement gap MG, the UE 105 may perform measurements on a neighboring cell, such that the UE 105 cannot receive or transmit with the serving cell. For example, during an activated measurement gap MG, the UE 105 may be configured to suspend transmission and reception to switch radio frequency (RF) or bandwidth in order to perform inter-frequency/RAT or intra-frequency measurement.

In some embodiments, the UE 105 may also stop performing measurements and logging measurement results, during the measurement gaps MG, for data collection for training the Al/ML model 50. For example, a first resource R1 for Al/ML data collection may correspond to (e.g., may coincide with) a first memory gap MG1 and a fourth resource R4 for Al/ML data collection may correspond to a second memory gap MG2. Based on the first resource R1 and the fourth resource R4 corresponding to the measurement gaps MG, the UE 105 may not perform measurements configured for Al/ML data collection on the first resource R1 and the fourth resource R4. Contrastingly, because a second resource R2 and a third resource R3 do not correspond to a measurement gap MG, the UE 105 may perform measurements for data collection on the second resource R2 and the third resource R3.

In other words, during an activated measurement gap MG, the UE 105 (e.g., an MAC entity) may be configured, on one or more serving cells in the corresponding frequency range of the measurement gap MG configured by measGapConfig (as specified in TS 38.331), not to perform measurements configured for Al/ML data collection.

In some embodiments, if a given UE 105 supports two independent measurement gaps MP for New Radio (NR) Frequency Range 1 (FR1) and Frequency Range 2 (FR2), the UE 105 can continue performing measurements and logging measurement results for data collection for training the Al/ML model 50 if the associated serving cell does not belong to the measurement gap operation. That is, if the network node 110 (e.g., the gNB) configures an FR2 gap, which means the measurement gap MG is applied to serving cells on FR2 frequency carriers, the UE 105 can still perform measurements and data logging for data collection for training the Al/ML model 50 if the serving cells are on FR1.

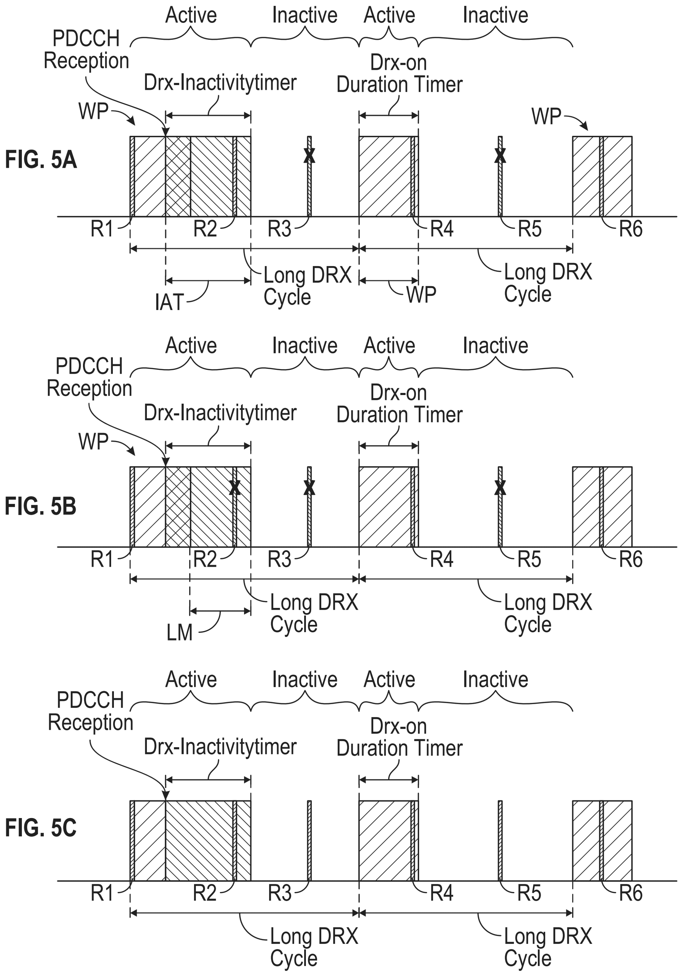

FIG. 5A is a block diagram depicting example operations for skipping measurements for data collection in discontinuous reception (DRX), according to some embodiments of the present disclosure.

Referring to FIG. 5A, in NR, discontinuous reception (DRX) may be enabled for UE power saving. In a DRX operation, the UE 105 may be configured, by the NW, to wake up every DRX cycle for a wake-up timer, such as *drx-onDurationTimer.* For example, the UE 105 may wake up when the *drx-onDurationTimer* is running. The wake-up time (when the wake-up timer is running) may be referred to as an active time. During the active time, the UE 105 may monitor PDCCH and stop transmitting some uplink signals (e.g. physical uplink control channels (PUCCHs)). If there is a PDCCH reception, the active time may be extended by an inactivity timer IAT (e.g., another DRX timer, such as *Drx-Inactivitytimer*). That is, to save UE battery power, the UE 105 may be configured, in DRX operation, to sleep and wakeup based on a wakeup pulse WP. In wakeup, the UE 105 may monitor a PDCCH to see if any data has been received. When a PDCCH includes data, the inactivity timer IAT may extend the wakeup time (e.g., may extend the active time).

In some embodiments, the UE 105 may be allowed (e.g., may be configured by the NW) to perform measurements for data collection if (e.g., only if) the UE 105 is in the active time. For example, the UE 105 may skip performing (e.g., may not perform) measurements for data collection if the UE 105 is not in the active time.

For example, and still referring to FIG. 5A, the UE 105 may perform measurements, for data collection, on a first resource R1, a second resource R2, a fourth resource R4, and a sixth resource R6 because these resources correspond to (e.g., coincide with) an active time/active operation (also referred to as a wakeup time or wakeup operation). In such embodiments, the UE 105 may not perform measurements, for data collection, on a third resource R3 or a fifth resource R5 because these resources correspond to an inactive time/inactive operation (also referred to as a sleep time or sleep operation).

FIG. 5B is a block diagram depicting example operations for skipping measurements for data collection in DRX when a logging-mask LM is enabled, according to some embodiments of the present disclosure.

FIG. 5C is a block diagram depicting example operations for performing measurements for data collection in DRX in inactive periods, according to some embodiments of the present disclosure.

In some systems, DRX operations may be more complicated (e.g., may not be simple or efficient) from the perspective of operating the UE 105 because the active time may be variable, depending on the reception of PDCCH in NR. For example, in DRX operation, if the UE 105 is not in active time, CSI report may not be limited to on duration time (e.g., may not be limited to when *drx-onDurationTimer* is running), depending on the network node 110 (e.g., the gNB) configuration of a CSI mask (e.g., *csi-Mask*).

In some embodiments, to account for variability in active timing, signaling may be used to limit measurement and logging measurement results for data collection, to train the Al/ML model 50, in DRX operation.

For example, and referring to FIG. 5B, in some embodiments, signaling (e.g., one-bit signaling, such as *logging-Mask*) may be used to indicate whether a measurement can be skipped when a wake-up timer, such as *drx-onDurationTimer,* is expired. Such signaling may be the same as, or similar to how *csi-Mask* is operated for existing CSI reports. For example, if the NW configures a logging mask LM (e.g., *logging-Mask*), the UE 105 may perform measurements and logging measurement results for data collection for training the Al/ML model 50 only when the wake-up timer (e.g., *drx-onDurationTimer*) is running. Otherwise, the UE 105 may perform measurements whenever the UE 105 is capable of performing measurements (e.g., if the UE 105 is in an active period, as discussed with reference to FIG. 5A). For example, unlike the method discussed above with reference to FIG. 5A, in which the second resource R2 was measured, in some embodiments, the measurement of the second resource R2 may be skipped (e.g., may not be performed) because the second resource R2 corresponds to (e.g., coincides with) the logging mask LM configured to correspond to the inactivity timer IAT. For example, the logging mask LM may start with the end of the wakeup pulse WP and extend to the end of the inactivity timer IAT.

Referring to FIG. 5C, in some embodiments, signaling (e.g., one-bit signaling, such as *logging-InActive*) may be used to indicate whether measurements can be skipped when the UE 105 is not in an active period. For example, if the NW configures an inactive-logging state for the UE 105 (e.g., *logging-InActive*), the UE 105 may perform measurements and measurement results logging for data collection regardless of whether the UE 105 is in active operation or not. Otherwise, the UE 105 may be allowed to skip measurements and measurement results logging for data collection for training the Al/ML model 50 if the UE 105 is not in active time, as discussed with reference to FIGS. 5A and FIG. 5B. In such embodiments configured for the inactive-logging state, UE power saving may be reduced, but the inactive-logging state can enable data to be collected with reduced interruption (e.g., with minimal interruption). For example, unlike the methods discussed above with reference to FIGS. 5A and 5B, in which measurements for the third resource R3 and the fifth resource R5 were skipped, and unlike the method discussed above with reference to FIG. 5B, in which the measurement for the second resource R2 was skipped, in some embodiments, the UE 105 may perform measurements of the second resource R2, of the third resource R3, and of the fifth resource R5 because network node 110 has configured the UE 105 to measure during active periods and to wake up during inactive periods to perform measurements and logging for data collection.

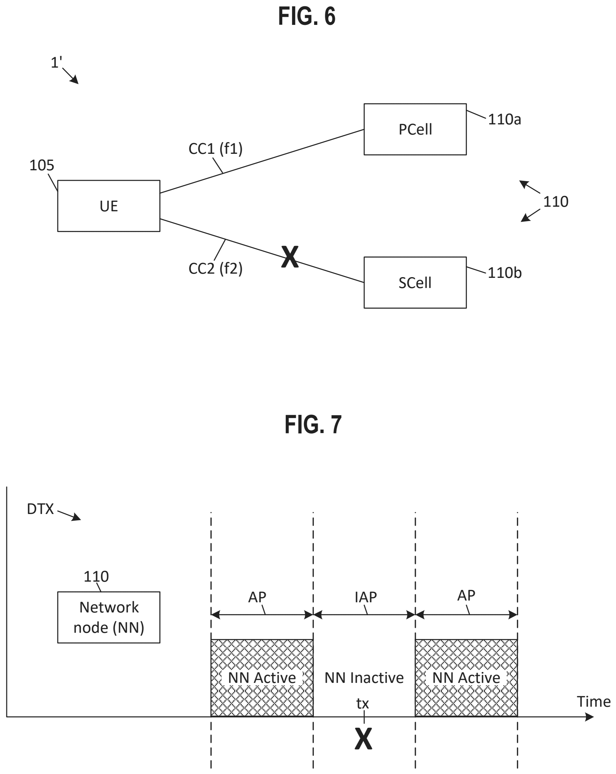

FIG. 6 is a block diagram depicting a system 1' for skipping measurements for data collection when a secondary cell (SCell) 110b is deactivated, according to some embodiments of the present disclosure.

Referring to FIG. 6, if CA is supported, the network node 110 (e.g., the gNB) can activate and deactivate SCells 110b depending on a traffic situation or a channel situation. If the NW deactivates the SCell 110b, the UE 105 may stop some operations associated to (e.g., associated with) the SCell, including stopping receiving downlink signaling.

In some embodiments, to comply with the status of the SCell 110b, based on the SCell 110b being deactivated, the UE 105 may suspend measurements of resources (e.g., CSI-RS resources) and measurement results logging for training the Al/ML model 50. That is, based on the SCell 110b being deactivated, the UE 105 may not perform logging of CSI for the SCell 110b. For example, the network node 110 may deactivate the SCell 110b so that there is no operation on a component carrier (e.g., a second component carrier CC2 associated with a second frequency f2), used for carrier aggregation. The UE 105 may be configured not to perform measurements when the SCell 110b is deactivated and to perform measurements when the SCell 110b is activated.

FIG. 7 is a block diagram depicting example operations for skipping measurements for data collection in discontinuous transmission (DTX), according to some embodiments of the present disclosure.

Referring to FIG. 7, in some systems, DTX (e.g., cell DTX) may be used to save power consumption at the NW side. In some embodiments, the cell DTX operation controls UE monitoring of PDCCH and configured downlink assignments (e.g., in RRC_CONNECTED). The activation or deactivation of cell DTX operation may be determined with lower layer signaling or RRC configuration of related parameters (e.g. *cellDTX-DRX-Cycle*/*cellDTX-DRX-onDurationTimer*). If the serving cell is in a cell DTX active period AP, the UE 105 may monitor the PDCCH for which the network node 110 (e.g., the gNB) turns on downlink signal transmission. If the UE 105 is in a cell DTX inactive period IAP, the UE 105 may stop monitoring PDCCHs for which the network node 110 (e.g., gNB) turns off downlink signal transmission. That is, in DTX, the network node 110 may not send a signal during the inactive period IAP.

In cell DTX operation, the network node 110 (e.g., the gNB) may not transmit downlink signals, including resources (e.g., CSI resources), in cell DTX inactive periods IAP. In some embodiments, to avoid achieving incorrect measurements when the network node 110 does not transmit downlink signals, the UE 105 may be configured (e.g., by the network node 110) to perform measurement results logging only if the network node 110 sends resources (e.g., CSI resources) in an active period AP.

For example, the network node 110 may indicate whether CSI resources for data collection will be turned off or not during one or more cell DTX inactive periods IAP. If the network node 110 stops transmitting CSI resources during cell DTX inactive periods IAP, the UE 105 may stop performing measurement and measurement results logging for data collection for training the Al/ML model 50 if a corresponding serving cell is not in a cell DTX active period AP. For example, for each serving cell configured with cell DTX, the MAC entity (e.g., the UE 105) may be configured to not perform measurements for CSI resources, for data collection, if the cell DTX operation is activated and the serving cell is not in the cell DTX active period AP. In other words, in some embodiments, in DTX, the UE 105 may not perform measurements for data collection during inactive periods IAP, and the UE 105 may perform measurements for data collection during active periods AP. For example, the UE 105 may not perform a measurement at a time tx (e.g., a resource measurement time tx) corresponding to (e.g., coinciding with) the inactive period IAP.

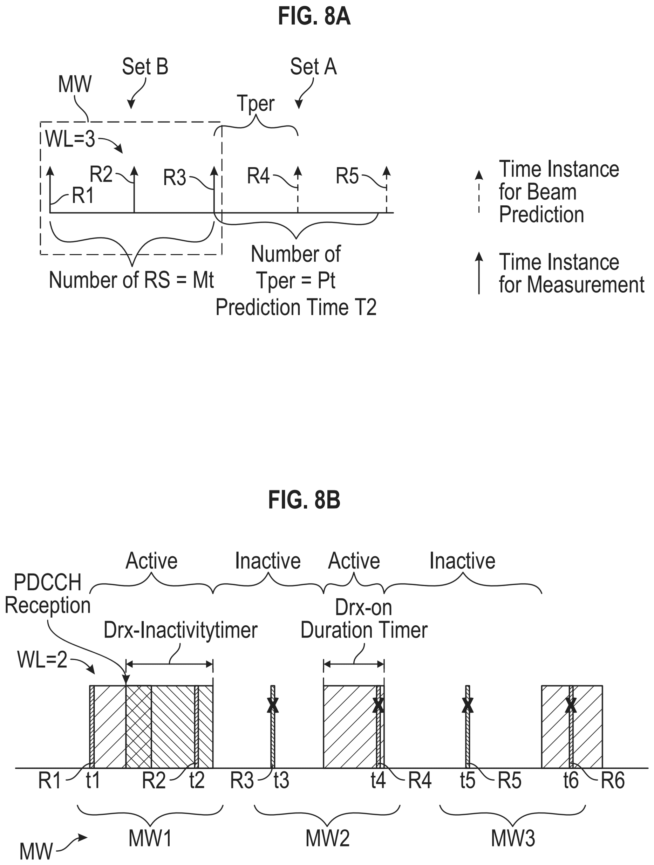

FIG. 8A is a diagram depicting an example of temporal prediction, according to some embodiments of the present disclosure.

FIG. 8B is a block diagram depicting example operations for skipping measurements for data collection in a resource measurement window MW, according to some embodiments of the present disclosure.

Referring to FIG. 8A, in some embodiments, in beam management case 2 (also referred to as BM-Case2 or temporal downlink beam prediction), one or more beams may be predicted for a number of future time instances based on beam measurements taken in a number of time instances in the past. For example, a first number Mt of RSs may be referred to as Set B (e.g., input data) and the predicted results for Pt time instances may be referred to Set A (e.g., inference results).

For temporal prediction, different models (e.g., different Al/ML models 50) may be trained based on different Set A and Set B pairs. Therefore, in some embodiments, the network node 110 (e.g., the gNB) may request the UE 105 to collect data based on (e.g., assuming) a particular pair (e.g., a particular Set A and Set B pair), causing the UE 105 to provide measurement results in a unit of Set A and Set B. In some embodiments, to define the unit of Set A and Set B, a measurement window MW (also referred to as a resource measurement window or a resource window) for measurements may be used. In some embodiments, a given measurement window may include one or more windows. For example, more than one window may be used in cases where Set A and Set B are different (e.g., where two sets of resource instances are not immediately adjacent to each other). The measurement window MW may have an Mt value of 3 for resources R1, R2, and R3 associated with Set B and used to predict resources for Set A. For example, Set A may have a Pt value of 2 for the predicted results for resources R4 and R5. The measurement window MW may also have a time period Tper indicating an amount of time from the last resource of Set B to the first predicted result (e.g., for resource R4).

In some embodiments, when a measurement window MW is configured, a skipping rule may be followed to avoid transmitting redundant data. For example, because the network node 110 (e.g., the gNB) may not use measurement results if not all the measurement results within a window are available, the UE 105 may skip the whole window, instead of just skipping each measurement occasion.

For example, and referring to FIG. 8B, in a DRX case, the measurement windows MW may be defined to have 2 measurement instances as the window length WL. The UE 105 may skip all the measurements in each measurement window MW having one or more measurements that are configured to be skipped based on another rule (e.g., based on the methods discussed above). For example, the UE 105 may be configured to skip measurements for the third resource R3 at t3 and for the fifth resource R5 at t5 based on the third resource R3 and the fifth resource R5 corresponding to (e.g., coinciding with) inactive periods. In some embodiments, the UE 105 may also skip performing a measurement for the fourth resource R4 at t4 based on the fourth resource R4 at t4 corresponding to the same measurement window MW (e.g., MW2) as the skipped third resource R3 at t3. The UE 105 may also skip performing a measurement for the sixth resource R6 at t6 based on the sixth resource R6 at t6 corresponding to the same measurement window MW (e.g., MW3) as the skipped fifth resource R5 at t5.

In other words, in some embodiments, if one opportunity for a measurement for data collection is not available in the active time, the UE 105 may skip all measurements for all resources R in a given measurement window MW because the measurements would not be useful if the entire group of resources R within the given measurement window MW are not available.

FIG. 9, consisting of FIGs. 9A and 9B, is diagram depicting a table of values for reporting measurement results and skipped measurement results, according to some embodiments of the present disclosure.

Referring to FIG. 9, because data collection may be used for model training at the NW side, training quality of the Al/ML model 50 (see FIG. 1A) may be improved based on providing the NW with information (e.g., with exact information) indicating if (e.g., when) the UE 105 skips measurement and measurement results logging for data collection. In some embodiments, the network node 110 may expect that the UE 105 provides measurement results taken in multiple time instances in chronological order. Therefore, if there is no additional information provided by the UE 105 to indicate that a measurement has been skipped, model training may be negatively impacted due to training based on a corrupted data set.

In some embodiments, to avoid negatively impacting the training of the Al/ML model 50, one of the measurement values listed in the table of FIG. 9 may be reserved for an absence of a measurement result filed (e.g., in place of a missing measurement result) in the measurement-results data MRD (see FIG. 2) to indicate one or more skipped measurements and measurement results logging for data collection to train the Al/ML model 50.

An L1 synchronization signal RSRP (SS-RSRP) and CSI-RSRP reporting range may be defined to be from -140 to -40 dBm (decibel-milliwatts) with 1dB (decibel) resolution. According to TS38.133, only reported values from RSRP_18 to RSRP_113 may be used. In some embodiments, a reserved bit (e.g., RSRP_0 or RSRP_127) may be defined to indicate that a given measurement result is not available due to skipping of the measurement. As such, in some embodiments, the measurement-results data MRD may include reported values (e.g., RSRP_18 to RSRP_113) for performed measurements for data collection and may include the reported value RSRP_0 or RSRP 127 for skipped measurements.

In some embodiments, the UE 105 may send measurement-results data MRD including time information indicating that measurement skipping has occurred. In some cases (e.g. BWP switching, SCell deactivation, or DRX operation), the UE 105 may skip measurements for data collection for a long time period. However, if skipping happens for a long time period, indication of skipping with the reserved bit (e.g., with RSRP_0 or with RSRP 127), as discussed above, may not be suitably efficient in terms of signaling overhead. Accordingly, instead of using a reserved bit to indicate skipping, in some embodiments, the UE 105 may indicate time information indicating that a measurement is skipped or that a measurement is started.

For example, in some embodiments, the measurement-results data MRD may indicate a start time and an ending time indicating when measurements were skipped. For example, an absolute time in a format of YY-MM-DD HH:MM:SS (e.g., indicating year-month-day hour:month:second) and using a binary coded decimal (BCD) for encoding may be used to provide start and end times. In some embodiments, to reduce signaling overhead (e.g., because BCD encoding YY-MM-DD HH:MM:SS may use 48 bits according to the current RRC signaling), relative time information may be used instead of absolute time information. For example, the reference of relative time may be reported by the UE 105 or may be indicated by the network node 110 (e.g., gNB) or defined as the time when the UE 105 receives an RRC reconfiguration message or when the first CSI-RS resource after the RRC reconfiguration message is received.

In some embodiments, the measurement-results data MRD may indicate a start time for when each measurement starts. Because measurements, in some embodiments, are taken periodically with a configured periodicity, the NW may estimate how many measurements are skipped by using two consecutive starting time and number of measurement results taken in time instances. For example, in some embodiments, the relative time may be indicated by the number of System Frame Number (SFN) and slots (e.g., n_slot) counted after the first CSI-RS resource occasion in the time domain upon reconfiguration. Alternatively, in some embodiments, the relative time may be defined as a number of CSI-RS resource occasions (e.g., n times) after the first CSI-RS resource occasion in the time domain upon reconfiguration.

As discussed above, if the UE 105 indicates the skipping of measurements for data collection, the UE 105 may also indicate why a measurement is skipped because the NW may not track (e.g., may not exactly track) a status of the UE 105. In some embodiments, in addition to the colliding events (e.g., the conflicting features CF) discussed above, the UE 105 may also skip measurements for data collection due to several other reasons. One case may be when layer 3 (L3) event-based logging is applied. In some embodiments, L3 may be used for handover measurements. If the NW enables L3 event-based logging, the UE 105 may stop measurements for data collection when a serving cell quality is better or worse than a threshold. Another case may be when the UE 105 is allowed to stop logging due to an internal status of the UE 105 (e.g. a full memory or a lower UE power). For example, the UE 105 may stop logging based on a memory of the UE reaching a maximum storage threshold or a power level of the UE 105 reaching a minimum UE power level threshold. In some embodiments, the UE 105 may indicate the reason why a measurement is skipped based on codes representing each reason.

FIG. 10 is a block diagram of an electronic device 1001 in a network environment 1000, according to some embodiments of the present disclosure.

Referring to FIG. 10, the electronic device 1001 (e.g., a UE) in a network environment 1000 may communicate with an electronic device 1002 via a first network 1098 (e.g., a short-range wireless communication network), or an electronic device 1004 or a server 1008 via a second network 1099 (e.g., a long-range wireless communication network). The electronic device 1001 may communicate with the electronic device 1004 via the server 1008. The electronic device 1001 may include a processor 1020, a memory 1030, an input device 1050, a sound output device 1055, a display device 1060, an audio module 1070, a sensor module 1076, an interface 1077, a haptic module 1079, a camera module 1080, a power management module 1088, a battery 1089, a communication module 1090, a subscriber identification module (SIM) card 1096, or an antenna module 1097. In one embodiment, at least one (e.g., the display device 1060 or the camera module 1080) of the components may be omitted from the electronic device 1001, or one or more other components may be added to the electronic device 1001. Some of the components may be implemented as a single integrated circuit (IC). For example, the sensor module 1076 (e.g., a fingerprint sensor, an iris sensor, or an illuminance sensor) may be embedded in the display device 1060 (e.g., a display).

The processor 1020 may execute software (e.g., a program 1040) to control at least one other component (e.g., a hardware or a software component) of the electronic device 1001 coupled with the processor 1020 and may perform various data processing or computations.

As at least part of the data processing or computations, the processor 1020 may load a command or data received from another component (e.g., the sensor module 1076 or the communication module 1090) in volatile memory 1032, process the command or the data stored in the volatile memory 1032, and store resulting data in non-volatile memory 1034. The processor 1020 may include a main processor 1021 (e.g., a central processing unit (CPU) or an application processor (AP)), and an auxiliary processor 1023 (e.g., a graphics processing unit (GPU), an image signal processor (ISP), a sensor hub processor, or a communication processor (CP)) that is operable independently from, or in conjunction with, the main processor 1021. Additionally or alternatively, the auxiliary processor 1023 may be adapted to consume less power than the main processor 1021, or execute a particular function. The auxiliary processor 1023 may be implemented as being separate from, or a part of, the main processor 1021.

The auxiliary processor 1023 may control at least some of the functions or states related to at least one component (e.g., the display device 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). The auxiliary processor 1023 (e.g., an image signal processor or a communication processor) may be implemented as part of another component (e.g., the camera module 1080 or the communication module 1090) functionally related to the auxiliary processor 1023.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034. Non-volatile memory 1034 may include internal memory 1036 and/or external memory 1038.

The program 1040 may be stored in the memory 1030 as software, and may include, for example, an operating system (OS) 1042, middleware 1044, or an application 1046.

The input device 1050 may receive a command or data to be used by another component (e.g., the processor 1020) of the electronic device 1001, from the outside (e.g., a user) of the electronic device 1001. The input device 1050 may include, for example, a microphone, a mouse, or a keyboard.

The sound output device 1055 may output sound signals to the outside of the electronic device 1001. The sound output device 1055 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1060 may visually provide information to the outside (e.g., a user) of the electronic device 1001. The display device 1060 may include, for example, a display, a hologram device, or a projector and control circuitry to control a corresponding one of the display, hologram device, and projector. The display device 1060 may include touch circuitry adapted to detect a touch, or sensor circuitry (e.g., a pressure sensor) adapted to measure the intensity of force incurred by the touch.

The audio module 1070 may convert a sound into an electrical signal and vice versa. The audio module 1070 may obtain the sound via the input device 1050 or output the sound via the sound output device 1055 or a headphone of an external electronic device 1002 directly (e.g., wired) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. The sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device 1002 directly (e.g., wired) or wirelessly. The interface 1077 may include, for example, a high- definition multimedia interface (HDMI), a universal serial bus (USB) interface, a secure digital (SD) card interface, or an audio interface.

A connecting terminal 1078 may include a connector via which the electronic device 1001 may be physically connected with the external electronic device 1002. The connecting terminal 1078 may include, for example, an HDMI connector, a USB connector, an SD card connector, or an audio connector (e.g., a headphone connector).

The haptic module 1079 may convert an electrical signal into a mechanical stimulus (e.g., a vibration or a movement) or an electrical stimulus which may be recognized by a user via tactile sensation or kinesthetic sensation. The haptic module 1079 may include, for example, a motor, a piezoelectric element, or an electrical stimulator.

The camera module 1080 may capture a still image or moving images. The camera module 1080 may include one or more lenses, image sensors, image signal processors, or flashes. The power management module 1088 may manage power supplied to the electronic device 1001. The power management module 1088 may be implemented as at least part of, for example, a power management integrated circuit (PMIC).

The battery 1089 may supply power to at least one component of the electronic device 1001. The battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the AP) and supports a direct (e.g., wired) communication or a wireless communication. The communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as BLUETOOTH^{™}, wireless-fidelity (Wi-Fi) direct, or a standard of the Infrared Data Association (IrDA)) or the second network 1099 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1092 may identify and authenticate the electronic device 1001 in a communication network, such as the first network 1098 or the second network 1099, using subscriber information (e.g., international mobile subscriber identity (IMSI)) stored in the SIM card 1096.

The antenna module 1097 may transmit or receive a signal or power to or from the outside (e.g., the external electronic device) of the electronic device 1001. The antenna module 1097 may include one or more antennas, and, therefrom, at least one antenna appropriate for a communication scheme used in the communication network, such as the first network 1098 or the second network 1099, may be selected, for example, by the communication module 1090 (e.g., the wireless communication module 1092). The signal or the power may then be transmitted or received between the communication module 1090 and the external electronic device via the selected at least one antenna.

Commands or data may be transmitted or received between the electronic device 1001 and the external electronic device 1004 via the server 1008 coupled with the second network 1099. Each of the electronic devices 1002 and 1004 may be a device of a same type as, or a different type, from the electronic device 1001. All or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1001. The electronic device 1001 may provide the outcome, with or without further processing of the outcome, as at least part of a reply to the request. To that end, a cloud computing, distributed computing, or client-server computing technology may be used, for example.

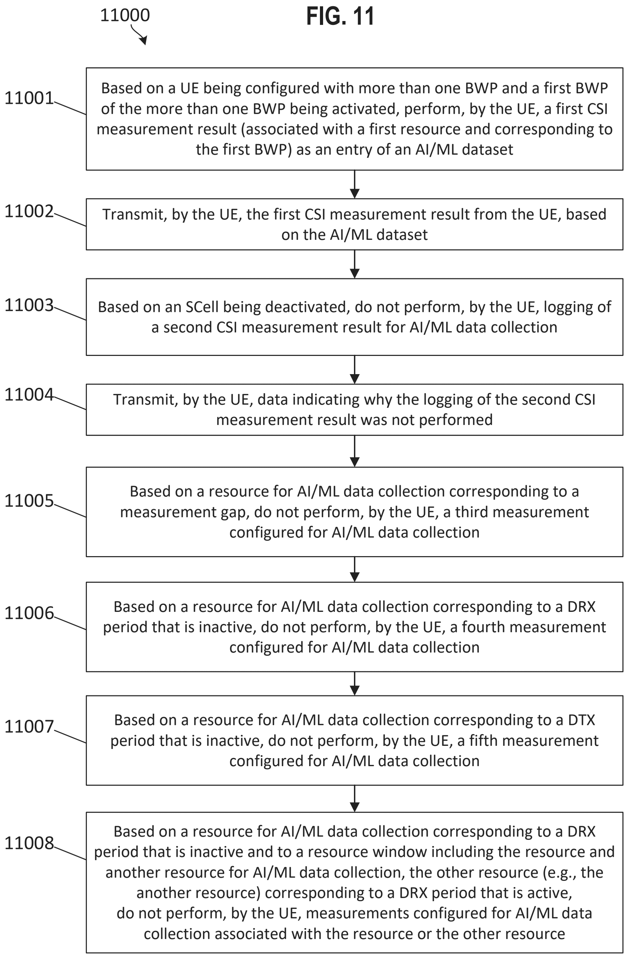

As discussed above, the processing circuit 120 (see FIG. 1A), may perform the various methods disclosed herein and may correspond to the processor 1020 discussed above with reference to FIG. 10. For example, the processor 1020 may perform a method 11000, which is discussed in further detail below with reference to FIG. 11. The radio 115 (see FIG. 1A) may correspond to the communication module 1090 (see FIG. 10).

FIG. 11 is a flowchart depicting example operations of the method 11000 for data collection, according to some embodiments of the present disclosure. Although FIG. 11 illustrates various operations in a method for handling resource measurements for data collection, embodiments according to the present disclosure are not limited thereto, and according to various embodiments, the method may include additional operations, or fewer operations, or the order of operations may vary, unless otherwise stated or implied.

Referring to FIG. 11, the method 11000 may include one or more of the following operations. Based on a UE 105 being configured with more than one BWP and a first BWP of the more than one BWP being activated (e.g., BWP2 as depicted in FIG. 3), perform, by the UE 105, a first CSI measurement result, associated with a first resource (e.g., the first resource R1 or the second resource R2 as depicted in FIG. 3) and corresponding to the first BWP, as an entry of an Al/ML dataset (operation 11001).

For example, as discussed above with reference to FIG. 3, a first resource R1 (e.g., a CSI-RS resource) and a second resource R2 may correspond to (e.g., may coincide with) a second bandwidth part BWP2 that is active. As such, the UE 105 may perform measurements on the first resource R1 and the second resource R2, which are configured for Al/ML data collection associated to the second bandwidth part BWP2 for data collection. In some embodiments, based on the UE 105 being configured for Al/ML data collection associated to (e.g., associated with) the first BWP, the UE 105 may perform a first CSI measurement corresponding to the first BWP and may log (e.g., may save) a result of the first CSI measurement (e.g., the first CSI measurement result) as an entry of an Al/ML dataset (e.g., an Al/ML log).

The UE 105 may transmit the first CSI measurement result from the UE 105 (e.g., may transmit the measurement-results data MRD of FIG. 2) based on the Al/ML dataset (operation 11002).

For example, as discussed above with reference to FIGS. 2 and 9, the UE 105 may send memory-results data MRD including data indicating results of the first measurement (e.g., RSRP_1), the n-th measurement (e.g., RSRP_n), one or more intermediate measurements occurring between the first measurement and the n-th measurement (e.g., RSRP_2), and data indicating which measurements were skipped (e.g., RSRP_3 and RSRP_4). As discussed above with reference to FIG. 3, in some embodiments, the UE 105 may transmit the first CSI measurement result from the UE, based on the Al/ML dataset. For example, the UE 105 may send the first CSI measurement result to the network node 110 (see FIG. 1). The network node 110 may train the Al/ML model 50 using the first CSI measurement result.

Based on an SCell (e.g., the SCell 110b of FIG. 6) being deactivated, the UE 105 may not perform logging of a second CSI measurement result for Al/ML data collection (operation 11003).

For example, as discussed above with reference to FIG. 6, to comply with the status of the SCell 110b, based on the SCell 110b being deactivated, the UE 105 may be configured to suspend measurements of resources (e.g., CSI-RS resources) and measurement results logging for training the Al/ML model 50.

The UE 105 may transmit data indicating why the logging of the second CSI measurement result was not performed (operation 11004).

For example, as discussed above with reference to FIG. 9, if the UE 105 indicates the skipping of measurements for data collection, the UE 105 may also indicate why a measurement is skipped because the NW may not track (e.g., may not exactly track) a status of the UE 105.

Based on a resource (e.g., R1 or R4 of FIG. 4) for Al/ML data collection corresponding to a measurement gap MG, the UE 105 may not perform a third measurement configured for Al/ML data collection (operation 11005).

For example, as discussed above with reference to FIG. 4, during an activated measurement gap MG, the UE 105 may be configured to suspend transmission and reception to switch radio frequency (RF) or bandwidth in order to perform inter-frequency/RAT or intra-frequency measurement. The UE 105 may also stop performing measurements and measurement results logging, during the measurement gaps MG, for data collection for training the Al/ML model 50.

Based on a resource (e.g., R3 or R5 of FIG. 5A) for Al/ML data collection corresponding to a DRX period that is inactive, the UE 105 may not perform a fourth measurement configured for Al/ML data collection (operation 11006).

For example, as discussed above with reference to FIG. 5A, the UE 105 may be allowed (e.g., may be configured by the NW) to perform measurements for data collection if (e.g., only if) the UE 105 is in the active time. For example, the UE 105 may skip performing (e.g., may not perform) measurements for data collection if the UE 105 is not in the active time.

Based on a resource (e.g., time tx of FIG. 7) for Al/ML data collection corresponding to a DTX period that is inactive, the UE 105 may not perform, a fifth measurement configured for Al/ML data collection (operation 11007).

For example, as discussed above with reference to FIG. 7, to avoid achieving incorrect measurements when the network node 110 does not transmit downlink signals, the UE 105 may be configured (e.g., by the network node 110) to perform measurement results logging only if the network node 110 sends resources (e.g., CSI resources) in an active period AP.

Based on a resource for Al/ML data collection corresponding to a DRX period that is inactive and to a resource window (e.g., the measurement window MW2 of FIG. 8B) comprising the resource (e.g., R3 of FIG. 8B) and another resource (e.g., R4 of FIG. 8B) for Al/ML data collection, the other resource corresponding to a DRX period that is active, the UE 105 may not perform measurements configured for Al/ML data collection associated with the resource or the other resource (operation 11008).

For example, as discussed above with reference to FIGS. 8A and 8B, the UE 105 may also skip performing a measurement for the fourth resource R4 at t4 based on the fourth resource R4 at t4 corresponding to the same measurement window MW (e.g., MW2) as the skipped third resource R3 at t3.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

## Claims

1. A method (11000) comprising:
based on:
a user equipment, UE (105), being configured with more than one bandwidth part, BWP; and
a first BWP of the more than one BWP being activated,
performing logging (11001), by the UE (105), of a first channel state information, CSI, measurement result associated with a first resource, corresponding to the first BWP, as an entry of an artificial-intelligence/machine-learning, Al/ML, dataset; and
transmitting (11002), by the UE (105), the first CSI measurement result from the UE (105), based on the Al/ML dataset.

2. The method (11000) of claim 1, wherein the Al/ML dataset comprises data indicating that a second CSI measurement was not performed.

3. The method (11000) of claim 1 or 2, further comprising:
based on a second BWP of the more than one BWP being deactivated, not performing logging, by the UE (105), of a second CSI measurement result for Al/ML data collection associated to the second BWP.

4. The method (11000) of claim 2 or 3, further comprising transmitting, by the UE (105), data indicating why the logging of the second CSI measurement was not performed.

5. The method (11000) of any one of claims 1 to 4, further comprising:
based on a second resource for Al/ML data collection corresponding to a measurement gap,
not performing, by the UE (105), a second measurement for Al/ML data collection, the second measurement being associated with the second resource.

6. The method (11000) of any one of claims 1 to 5, further comprising:
based on a second resource for Al/ML data collection corresponding to a discontinuous reception, DRX, period that is inactive,
not performing, by the UE (105), a second measurement for Al/ML data collection, the second measurement being associated with the second resource.

7. The method (11000) of any one of claims 1 to 6, further comprising:
based on a second resource for Al/ML data collection corresponding to a discontinuous reception, DRX, period that is active and corresponding to a logging mask,
not performing, by the UE (105), a second measurement configured for Al/ML data collection, the second measurement being associated with the second resource.

8. The method (11000) of any one of claims 1 to 7, further comprising:
based on a second resource for Al/ML data collection corresponding to a discontinuous reception, DRX, period that is inactive,
performing, by the UE (105), a second measurement for Al/ML data collection, the second measurement being associated with the second resource.

9. The method (11000) of any one of claims 1 to 8, further comprising:
based on a second resource measurement time for Al/ML data collection corresponding to a discontinuous transmission, DTX, period that is inactive,
not performing, by the UE (105), a second measurement for Al/ML data collection, the second measurement being associated with the second resource measurement time.

10. The method (11000) of any one of claims 1 to 9, further comprising:
based on a second resource for Al/ML data collection corresponding to a discontinuous reception, DRX, period that is inactive and a resource window comprising the second resource and a third resource for Al/ML data collection, the third resource corresponding to a DRX period that is active,
not performing, by the UE (105), a second measurement for Al/ML data collection associated with the second resource; and
not performing, by the UE (105), a third measurement for Al/ML data collection associated with the third resource.

11. A user equipment, UE (105), configured to perform:
based on:
the UE (105) being configured with more than one bandwidth part, BWP; and
a first BWP of the more than one BWP being activated,
logging (11001) of a first channel state information, CSI, measurement result associated with a first resource, corresponding to the first BWP, as an entry of an artificial-intelligence/machine-learning, Al/ML, dataset; and
transmitting (11002) the first CSI measurement result from the UE (105), based on the Al/ML dataset.

12. The UE (105) of claim 11, wherein the UE (105) is configured:
based on a second BWP of the more than one BWP being deactivated, not to perform logging of a second CSI measurement result for Al/ML data collection associated to the second BWP.

13. The UE (105) of claim 11 or 12, wherein the UE (105) is configured:
based on a second resource for Al/ML data collection corresponding to a discontinuous reception, DRX, period that is inactive,
perform a second measurement configured for AI/ML data collection, the second measurement being associated with the second resource.

14. The UE (105) of any one of claims 11 to 13, wherein the UE (105) is configured:
based on a second resource for an Al/ML data collection corresponding to a discontinuous reception, DRX, period that is inactive,
not to perform a second measurement configured for Al/ML data collection, the second measurement being associated with the second resource.

15. The UE (105) of any one of claims 11 to 14, wherein the UE (105) is configured:
based on a secondary cell, SCell (110b), being activated,
to perform logging of a second CSI measurement result for Al/ML data collection associated to the SCell (110b) for Al/ML data collection.
